# EUROPEAN PATENT APPLICATION

(11) **EP 4 571 663 A1**
(43) Date of publication of application: **18.06.2025**
(21) Application number: 23216367.5
(22) Date of filing: 13.12.2023
(51) Int. Cl.: G06T 19/00, G06T 1/60

(54) **VISUALIZING NON-ALIGNED DATA SETS**

(71) Applicant: My Virtual Reality Software AS, 0152 Oslo (NO)
(72) Inventor: VERSCHAEVE, Joris Constant Gaston, N-0771 Oslo (NO)
(74) Representative: Kaminski Harmann

(57) **Abstract**

The invention pertains to a computer-implemented method for visualizing 3D data of a multitude of data sets (1-5) in a scene using a computing device having limited available memory for visualizing the 3D data, the method comprising receiving the multitude of data sets, each data set having an LOD structure given as a tree comprising a multitude of nodes, determining the amount of memory available, selecting nodes of the data sets that comprise 3D data to be loaded into the available memory, loading the 3D data of the selected nodes into the memory; and visualizing the 3D data loaded into the memory on a display. Selecting the nodes comprises performing an LOD selection comprising obtaining camera-frustrum information defining a camera frustrum (10) comprising a near plane (11) and a far plane (12), dividing the camera frustrum by defining at least a near frustrum (15) and a background frustrum (16), defining a subset of data sets as foreground data sets based on an overlap of their nodes with the near frustrum, dividing the camera frustrum into a multitude of regions, allocating the available memory to the multitude of regions, and selecting, based on the allocated memory, the nodes that comprise 3D data to be loaded into the available memory. Allocating the available memory comprises determining, based at least on the amount of memory available, a tree-traversal depth, traversing the LOD structure of each foreground data set using the tree-traversal depth, recording all nodes that have an overlap with the camera frustrum and determining a screen space for each of the recorded nodes, mapping each recorded node to one of the regions, and assigning memory to each region based on the screen spaces of the nodes that have been mapped to the respective region.

## Description

The present invention pertains to a method for visualization of a multitude of data sets in the same scene, the data sets having level-of-detail structures, such as point cloud data sets. The method comprises performing a level-of-detail selection on a multitude of indexed data sets which are not necessarily aligned with respect to each other.

Level-of-detail selection is the process of selecting parts of the data from one or several data sets. For instance, US 6,639,598 B2 discloses a rendering method involving level-of-detail selection. This selection of relevant parts of a data set is particularly important in case of memory constraints.

Level-of-detail structures may be given by a tree, such as an octree, comprising a single root node and branches with nodes having a parent-child relation with respect to each other. In terms of this application, each node in the tree (which, by convention, is considered growing downwards) has zero or more child nodes, which are below it in the tree. A node that has at least one child node is the parent node of the child node. A node that has no child nodes is a leaf node. It is known to compute a tree structure on all nodes of all data sets and do the level-of-detail selection on this level-of-detail structure. Besides of being a heavy operation for the multitude of nodes, it has computational advantages to use the traversal structure of the octrees of each data set in its original way. For instance, EP 3 828 704 B1 discloses a method for acquiring and visualizing point clouds, wherein level-of-detail structures are octrees.

It is an object of the present invention to provide an improved method for visualizing a multitude of data sets in the same scene.

In particular, it is an object to provide such a method that allows displaying a large number of point clouds, for which a level-of-detail structure exists individually, but not with respect to each other.

It is a further object to provide such a method that can be executed on a device having low memory available for visualizing data, for instance on a device having a small graphics memory, e.g., a hand-held and/or low-end device.

At least one of these objects is achieved by the computer-implemented method of claim 1, and/or the dependent claims of the present invention.

A first aspect of the invention pertains to a computer-implemented method for visualizing 3D data (e.g., point cloud data) of a multitude of data sets in a scene using a computing device having limited available memory for visualizing the 3D data. The method is performed by the computing device and comprises:
- receiving the multitude of data sets, each data set of the multitude of data sets having a level-of-detail (LOD) structure given as a tree comprising a multitude of nodes, including a root node and branches with nodes having a parent-child relation with respect to each other;
- determining the amount of memory available for visualizing the 3D data (e.g., memory available in the graphics card of the device);
- selecting nodes of the data sets that comprise 3D data to be loaded into the available memory;
- loading the 3D data of the selected nodes into the memory; and
- visualizing the 3D data loaded into the memory on a display.

According to this aspect of the invention, selecting the nodes comprises performing a level-of-detail selection, which comprises
- obtaining camera-frustrum information defining a camera frustrum comprising (i.e., showing) at least a part of the scene, the camera frustrum comprising a near plane and a far plane;
- dividing the camera frustrum by defining at least a near frustrum and a background frustrum, the near frustrum being adjacent to the near plane and comprising a foreground of the scene, the background frustrum being adjacent to the far plane and comprising a background of the scene;
- defining a subset of data sets as foreground data sets based on an overlap of the nodes of the respective data set with the near frustrum;
- dividing the camera frustrum into a multitude of 3D regions;
- allocating the available memory to the multitude of 3D regions; and
- selecting, based on the allocated memory, nodes that comprise 3D data to be loaded into the available memory.

The allocation of the available memory comprises:
- determining, based at least on the amount of memory available, a first tree-traversal depth;
- traversing the LOD structure of each foreground data set using the first tree-traversal depth, thereby recording all nodes that have an overlap with the camera frustrum and determining a screen space for each of the recorded nodes;
- mapping each recorded node to one of the regions; and
- assigning memory to each region based on the screen spaces of the nodes that have been mapped to the respective region.

According to some embodiments, the method comprises defining a subset of data sets as background data sets based on an overlap of the nodes of the respective data set with the background frustrum, wherein the allocation of the available memory comprises:
- traversing the LOD structure of each background data set using the first or a second tree-traversal depth, thereby recording all nodes that have an overlap with the camera frustrum and determining a screen space for each of the recorded nodes;
- mapping each recorded node to one of the regions; and
- assigning memory to each region based on the screen spaces of the nodes that have been mapped to the respective region.

According to some embodiments, the first tree-traversal depth is used for traversing the LOD structure of each background data set, and determining the first tree-traversal depth is also based on a number of data sets in the camera frustrum.

According to some embodiments, a second tree-traversal depth is used for traversing the LOD structure of each background data set, wherein
- determining the first tree-traversal depth is also based on a number of data sets in the near frustrum, and
- allocating the available memory comprises determining, based at least on the amount of memory available and on a number of data sets in the background frustrum, the second tree-traversal depth.

According to some embodiments, the allocation of the available memory comprises
- estimating, based at least on a number of foreground data sets and background data sets, an amount of 3D data in the foreground and in the background; and
- assigning, based on the estimated amount of 3D data in the foreground and in the background, the available memory as foreground memory to the foreground and as background memory to the background.

In some embodiments, determining the first tree-traversal depth is based on the foreground memory, and determining the second tree-traversal depth is based on the background memory. In some embodiments, assigning memory to each region comprises assigning foreground memory to regions of the near frustrum and background memory to regions of the background frustrum.

According to some embodiments, assigning the available memory as foreground memory to the foreground and as background memory to the background comprises giving more weight to the estimated amount of 3D data in the foreground, particularly wherein more of the available memory is assigned to the foreground than to the background.

According to some embodiments, determining the first tree-traversal depth is also based on a number of data sets the near frustrum.

According to some embodiments, dividing the camera frustrum into a multitude of 3D regions comprises dividing both the near frustrum and the background frustrum into a multitude of 3D regions.

Accordingto some embodiments, the near frustrum and/or the background frustrum are divided into at least nine 3D regions, for instance in a 3×3 matrix.

According to some embodiments, defining the subset of data sets as foreground data sets comprises determining whether the root node intersects the nearfrustrum.

According to some embodiments, selecting the nodes comprises removing invisible data sets before performing the level-of-detail selection, for instance wherein the invisible data sets are removed by means of bounding-box culling.

Accordingto some embodiments, the computing device is a hand-held device, such as a tablet computer or smart phone, the hand-held device comprising a touch-sensitive display, and the 3D data loaded into the memory is visualized on the touch-sensitive display.

According to some embodiments, the memory for visualizing the data sets is a memory of a graphics card of the computing device.

A second aspect of the invention pertains to a computer program product comprising program code having computer-executable instructions for performing a method according to the first aspect of the invention.

A third aspect of the invention pertains to a hand-held computing device comprising a memory and a touch-sensitive display for visualizing 3D data loaded into the memory. For instance, the device may be a tablet computer or a smart phone. The device has stored a computer program product according to the second aspect and is configured for performing a method according to the first aspect of the invention.

The invention in the following will be described in detail by referring to exemplary embodiments that are accompanied by figures, in which:
- Fig. 1: illustrates a plurality of individual data sets, wherein the coordinate systems and level-of-detail systems are scaled, rotated and translated with respect to each other;
- Fig. 2: illustrates a subdivision of one of the data sets of Fig. 1 into nodes;
- Fig. 3: illustrates a camera view representing a scene with the data sets of Fig. 1;
- Figs. 4a-b: illustrate a level-of-detail selection based on limited information; and
- Fig. 5: shows a flow chart illustrating an exemplary embodiment of a method according to the invention; and
- Fig. 6: shows a flow chart illustrating the level-of-detail selection as part of the method of Fig. 5.

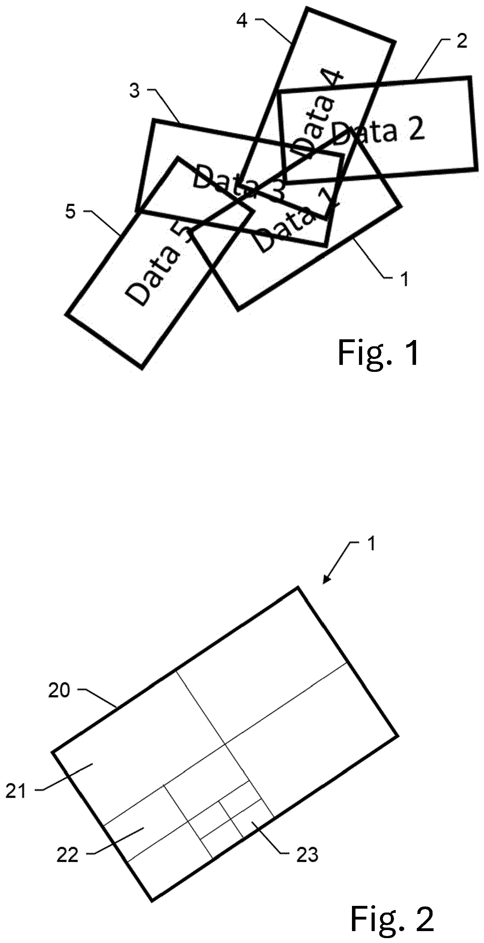

Figure 1 illustrates a typical situation with a plurality of individual data sets 1-5. The coordinate systems and level-of-detail systems of the individual data sets may be scaled, rotated and translated with respect to each other. Whereas in reality, the problem usually is three-dimensional, for illustration purposes it is shown here in two dimensions only. Also, the number of data sets can be into the thousands. Each data set has a level-of-detail structure. For instance, each data set may be related to a point cloud.

Figure 2 shows a first data set 1 of the data sets of Figure 1 being subdivided. Being only two-dimensional for illustration purposes, the first data set 1 is subdivided into four levels-of-detail (quadtree levels): the root node 20, four child nodes 21 of which one has again four child nodes 22 which again is subdivided into four child nodes 23. Usually, the level-of-detail structure of each data set is given by an octree consisting of a single root node and branches with nodes having a parent-child relation with respect to each other. Nodes that have no children are called leaf nodes. In three instead of two dimensions, there are eight children instead of four. It is further assumed that data, thus points, is repartitioned onto all nodes satisfying some logic of coarseness. Large structures are combined into the larger nodes, whereas finer details are gathered into smaller nodes. For points this is fairly straightforward by repartitioning the points into the nodes by some kind of principle, for example random picking or Poisson disk sampling.

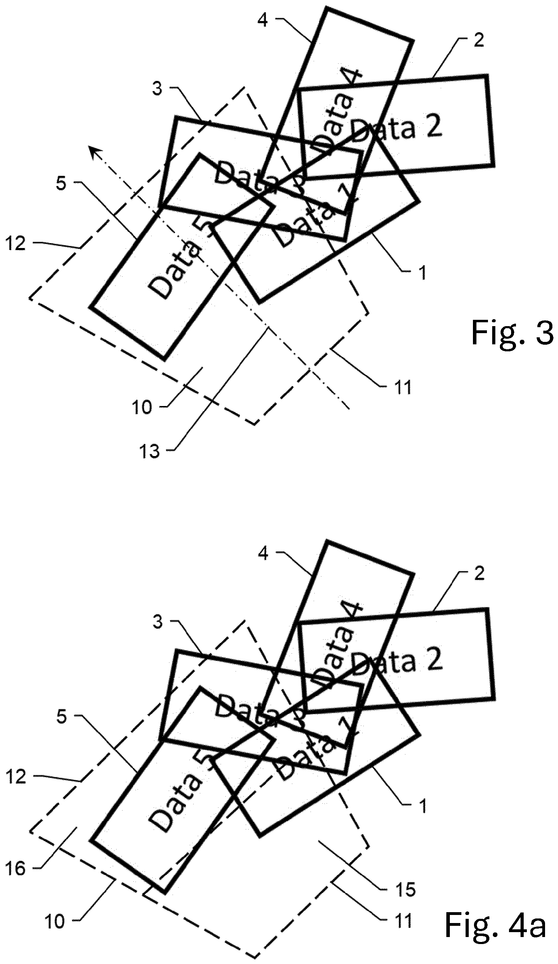

Figure 3 illustrates a typical camera view representing a scene with a plurality of different data sets 1-5. Given a camera view representing a scene on screen (camera frustrum 10), the challenge consists in choosing a subset from all the nodes of all the data sets 1-5, such that a memory limit - given for example by the graphic card - is respected. At the same time, the data on screen should still display a meaningful representation of all the data sets in question. A prerequisite for the algorithm to work is that the payload of each node, thus the memory it occupies, is reasonably small compared to the memory available - e.g., that of the graphics card. If for example the memory of a single root node corresponds to the entire memory available, it would only be possible to display a single root node at the time. The resulting view would then be incomplete as no features of the other data sets can be rendered.

A first part of the present invention is related to removing invisible data sets. For instance, this may be achieved by bounding-box culling. Alternatively, especially for medium-sized numbers of data sets, a linear walk through can be similarly efficient. The bounding-box culling may include organizing the bounding boxes of the data sets into a tree structure, which may be a simple axis-aligned-bounding-box tree. The camera frustrum 10 has a near plane 11 and a far plane 12 defined by the virtual camera's viewing direction 13. The near plane 11 is thus near the virtual camera, and the far plane 12 is at the opposite end of the frustrum 10. Some of the data sets 1-5 have an overlap with the camera frustum 10. A traversal of the bounding-box tree allows rejecting those data sets that lie completely outside of the camera frustum 10. In the example of Figure 3 this applies only to data set 2.

Nevertheless, the number of nodes falling into the frustum 10 can still vastly surpass the amount of storage available. Performing a level-of-detail selection per data set by allocating an equal part of the memory available for each data set would not account for the fact that parts of some data set might be more relevant to the scene than parts of another data set and therefore should be given more space in memory. In the example of Figure 3, only a small part of data set 4 lies in the frustrum 10, whereas data set 5 lies completely in the frustrum 10. Consequently, data set 4 is probably not as relevant as data set 5, and more data from data set 5 should be in the scene than from data set 4.

The level-of-detail selection has only limited information about the content of the node. This information is usually its (oriented) bounding box and the point count. Based on this limited information and assuming that the point count is essentially proportional to the memory consumption of the data set, the level-of-detail selection will decide which node data needs to be loaded to the graphics card. The standard graphics pipeline will then cull the individual points in each node.

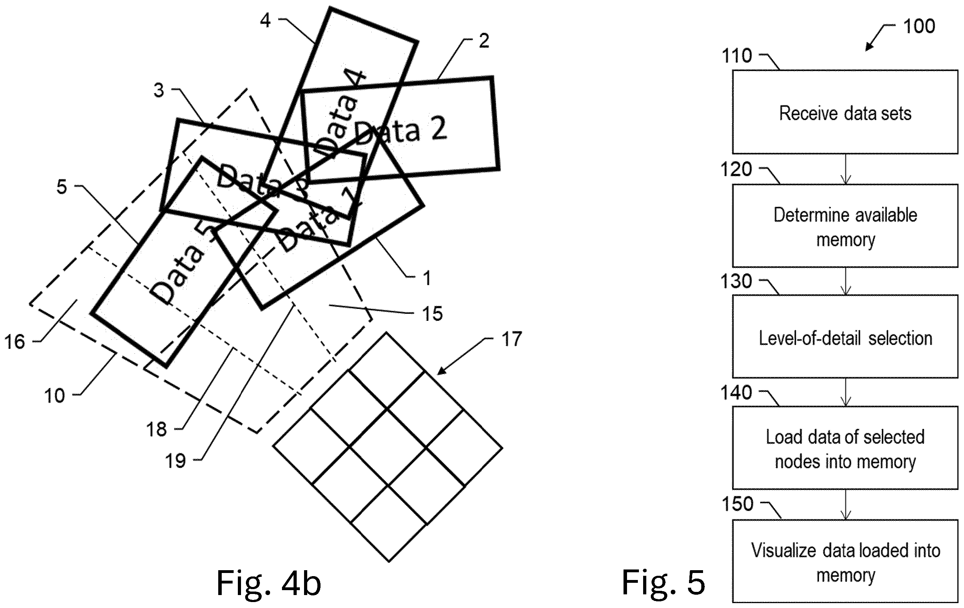

A second part of the present invention is related to this selection procedure given limited information. This is illustrated in Figures 4a and 4b. Once all root nodes intersecting the frustum 10 are determined, either by traversing the bounding box tree or a linear walk through all data sets, the method proceeds by organizing the remaining data sets spatially. Starting with the view direction, the data sets are separated into two categories: foreground data sets which are close to the near plane 11 and will make up the foreground, and the remaining data sets which will relate to the background (background data sets). This is shown in Figure 4a. Practically, this can be done by means of a smaller frustum (near frustum 15) close to the near plane 11 of the camera frustrum 10. The remaining part of the camera frustrum 10 thereby becomes the background frustrum 16.

For instance, all data sets which root node has an overlap with the near frustum 15 may be considered being part of the foreground (foreground data sets). In practice, often there will be a lot of large root nodes having actually no significant points inside the near frustum 15. Therefore, this search can be refined by only defining those data sets 1-5 to be part of the foreground which have nodes at a lower level-of-detail intersecting the near frustum 15. Alternatively, the absolute or relative intersecting volume between nodes and near frustum 15 can be computed and a threshold for determining the foreground data sets can be defined.

In principle, this subdivision in viewing direction could be refined by introducing a middle ground (or even further subdivisions), but for most applications the subdivision into foreground and background has proven to be sufficient.

Figure 4b shows a subdivision in the camera plane. Once foreground and background data sets have been differentiated, the camera plane is subdivided. This subdivision may be done for both the near frustum 15 and the background frustum 16. In Figure 5, grid 17 symbolizes the extension into the third dimension. The dashed lines 18, 19 refer to the vertical grid lines of the subdivision. In Figure 4b, near frustum 15 and background frustum are thereby subdivided into nine regions each. Alternatively, the subdivision of the near frustum 15 can be different to the one of the background frustum or even no subdivision can be applied to the near frustum 15.

From the number of data sets in the foreground and background, it can be estimated what share of data is present in each. If, for example, there are no data sets in the foreground, all memory will be given to the background. Otherwise, a larger portion of memory is given to the foreground as the points in the foreground tend to occlude points in the background. In addition, by zooming closer to a region, the user usually expects to have all data close to the camera appearing.

Starting with the foreground data set, the number of data sets in the foreground (near frustum 15) and the amount of memory available (e.g., available to the foreground) provide a rough estimation on how deep each tree can be traversed. In order to have some safety, each octree may be traversed somewhat deeper. The nodes 20-23 having an overlap with the camera frustum 10 are recorded. In addition, its screen space area is computed and recorded. Then, the nodes of each foreground octree are mapped to the subdivision cell having the largest share of this area. This way each node 20-23 is given an index for a subdivision region and, conversely, each subdivision region has a list of nodes. For each region, the nodes 20-23 are sorted according to their screen space area.

In case that data is provided only in the leaf nodes, then the octrees need to be traversed up to the leaf nodes and the most relevant data from the leaf nodes needs to be selected satisfying the memory constraint.

Having a memory limit for the foreground, an equal share is given to each of the subdivision regions and the nodes with largest screen space area are selected. Unused memory, for example when having empty regions, is given to regions with data. If, after this selection procedure, all foreground nodes have been selected and memory is still left, it is transferred to the background budget. The process is then repeated for the background data sets.

As a result, although the data sets are not aligned and there is no regular level-of-detail structure for all nodes of all data sets, a view of the multiple data sets can be generated which does not mass data into a single region of the scene, be it in the foreground/background or at a specific region in the view plane.

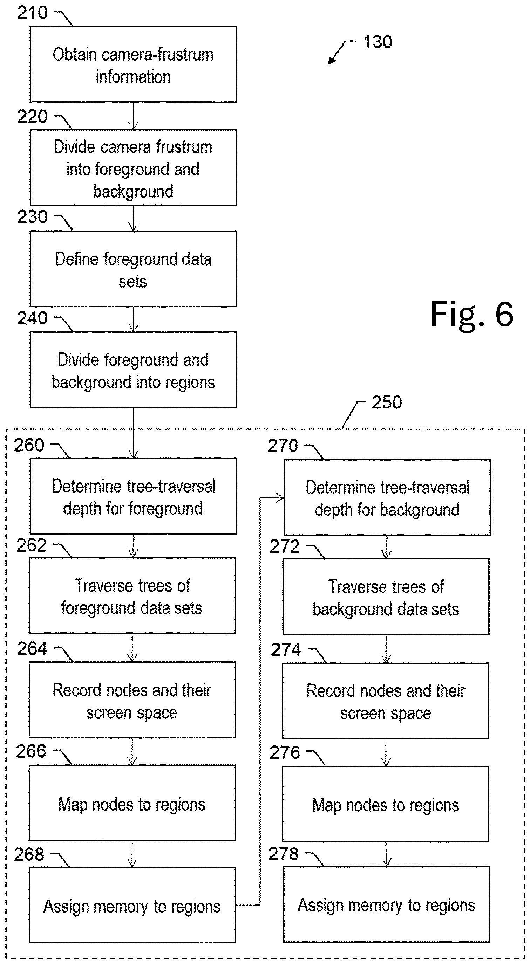

Figure 5 is a flow chart illustrating the steps of an exemplary embodiment of a method 100 for visualizing 3D data of a multitude of data sets according to the invention. The method is performed in a computing device. In particular, the available memory for visualizing the 3D data is limited, i.e., not sufficient for visualizing all of the 3D data. In step 110, the multitude of data sets are received. For instance, this may comprise storing the data sets on a hard drive of the computing unit. The data comprised by the data sets may comprise point cloud data or other 3D data. Each of the multitude of data sets has a level-of-detail (LOD) structure given as a tree comprising a multitude of nodes, including a root node and branches with nodes having a parent-child relation with respect to each other. In step 120, the amount of memory available for visualizing the 3D data is determined, for instance the memory available in the graphics card. In step 130, an LOD selection is performed for selecting nodes of the data sets that comprise 3D data to be loaded into the available memory. This LOD selection is described in detail in Figure 6. In step 140, the 3D data of the nodes that have been selected by means of the LOD selection process 130, are loaded into the memory. Finally, in step 150, the 3D data that has been loaded into the memory is visualized on a display-e.g. a display of the computing device.

Figure 6 illustrates the steps of an exemplary process of selecting the nodes by performing an LOD selection 130. The LOD selection comprises obtaining 210 camera-frustrum information, which defines a frustrum of a virtual camera. The camera frustrum corresponds to the scene in which the 3D data should be visualized. The camera frustrum is divided 220 by defining at least a near frustrum for a foreground and a background frustrum for a background of the scene/frustrum. A subset of the data sets is defined as foreground data sets. This includes determining whetherthe nodes of a data set overlap with the near frustrum.

Then, the camera frustrum is divided 240 into a multitude of 3D regions. This may include subdividing both the near frustrum and the background frustrum or only one of them (particularly at least the background frustrum) into a multitude of 3D regions. For instance, each of them can be subdivided into at least nine 3D regions, e.g., in a 3×3 matrix. The available memory is allocated 250 to these 3D regions, and, based on the allocated memory, the nodes that comprise 3D data to be loaded into the available memory are selected.

Allocating 250 the available memory to the 3D regions optionally may include estimating an amount of 3D data in the foreground and/or in the background based on a number of foreground data sets and/or background data sets, so that a certain amount of the available data can be reserved as foreground memory to the foreground and/or as background memory to the background. Optionally, more weight can be given to the estimated amount of 3D data in the foreground, so that a larger amount of the available memory will be assigned to the foreground than to the background.

Starting with the foreground, allocating 250 the available memory to the 3D regions of the foreground (i.e., the near frustrum) comprises determining 260, based at least on the amount of memory available and on a number of data sets in the nearfrustrum (or, alternatively, on a number of all data sets in the camera frustrum), a tree-traversal depth, and traversing 262 the LOD structure of each foreground data set using this tree-traversal depth, thereby recording 264 all nodes of these data sets that have an overlap with the camera frustrum. A screen space for each of the recorded nodes is computed. Each of the recorded nodes is mapped 266 to one of the regions. In particular, each node is mapped to that region at which it has the largest area share. Each node receives an index for its region and each region has a list of nodes. For each region, the nodes may then be sorted according to their screen space area. Memory is then assigned 268 to each foreground region based on the screen spaces of all the nodes that have been mapped to the respective region.

Allocating the available memory to the 3D regions of the background (i.e., the background frustrum) comprises corresponding steps 270, 272, 274, 276 and 278. Specifically, allocating 250 the available memory to the 3D regions of the background (i.e., the background frustrum) may comprise determining 270, based at least on the amount of memory available and on a number of data sets in the background frustrum, another tree-traversal depth (i.e., not necessarily the same as for the foreground). Alternatively, a common tree-traversal depth may be determined for, both, the foreground and the background. Then, the LOD structure of each background data set is traversed 272 using the tree-traversal depth (i.e., either the common tree-traversal depth or the background tree-traversal depth), thereby recording 274 all nodes of these data sets that have an overlap with the camera frustrum. A screen space for each of the recorded nodes is computed. Each of the recorded nodes is mapped 276 to one of the regions in the background. In particular, each node is mapped to that region at which it has the largest area share. Again, each node receives an index for its region and each region has a list of nodes. For each region, the nodes may then be sorted according to their screen space area. Memory is then assigned 278 to each background region based on the screen spaces of all the nodes that have been mapped to the respective region.

Tree-traversal depths for the foreground and for the background may be different. If the available memory has been split into foreground memory and background memory, determining 260 the foreground tree-traversal depth may be based on the foreground memory, and determining 270 the background tree-traversal depth may be based on the background memory. Also, assigning 268, 278 memory to the regions may comprise assigning only the foreground memory to the regions of the foreground and only background memory to the regions of the background.

Although the invention is illustrated above, partly with reference to some preferred embodiments, it must be understood that numerous modifications and combinations of different features of the embodiments can be made. All of these modifications lie within the scope of the appended claims.

## Claims

1. Computer-implemented method (100) for visualizing3D data of a multitude of data sets (1-5) in a scene using a computing device having limited available memory for visualizing the 3D data, the method comprising, in the computing device:
- receiving (110) the multitude of data sets (1-5), each data set of the multitude of data sets (1-5) having a level-of-detail structure given as a tree comprising a multitude of nodes (20-23), including a root node (20) and branches with nodes having a parent-child relation with respect to each other;
- determining (120) the amount of memory available for visualizing the 3D data;
- selecting nodes (20-23) of the data sets (1-5) that comprise 3D data to be loaded into the available memory;
- loading (140) the 3D data of the selected nodes into the memory; and
- visualizing (150) the 3D data loaded into the memory on a display,
**characterized in that**
selecting the nodes (20-23) comprises performing a level-of-detail selection (130) comprising:
- obtaining (210) camera-frustrum information defining a camera frustrum (10) comprising at least a part of the scene, the camera frustrum comprising a near plane (11) and a far plane (12);
- dividing (220) the camera frustrum (10) by defining at least a near frustrum (15) and a background frustrum (16), the near frustrum (15) being adjacent to the near plane (11) and comprising a foreground of the scene, the background frustrum (16) being adjacent to the far plane (12) and comprising a background of the scene;
- defining (230) a subset of data sets (1-5) as foreground data sets based on an overlap of the nodes (20-23) of the respective data set with the near frustrum (15);
- dividing (240) the camera frustrum (10) into a multitude of 3D regions;
- allocating (250) the available memory to the multitude of 3D regions; and
- selecting, based on the allocated memory, nodes (1-5) that comprise 3D data to be loaded into the available memory;
wherein allocating (250) the available memory comprises:
- determining (260), based at least on the amount of memory available, a first tree-traversal depth;
- traversing (262) the level-of-detail structure of each foreground data set using the first tree-traversal depth, thereby recording (264) all nodes (20-23) that have an overlap with the camera frustrum (10) and determining a screen space for each of the recorded nodes;
- mapping (266) each recorded node to one of the 3D regions; and
- assigning (268) memory to each region based on the screen spaces of the nodes that have been mapped to the respective 3D region.

2. Method (100) according to claim 1, comprising defining a subset of data sets (1-5) as background data sets based on an overlap of the nodes (20-23) of the respective data set with the background frustrum (16), wherein allocating (250) the available memory comprises:
- traversing (272) the level-of-detail structure of each background data set using the first or a second tree-traversal depth, thereby recording (274) all nodes (20-23) that have an overlap with the camera frustrum (10) and determining a screen space for each of the recorded nodes;
- mapping (276) each recorded node to one of the regions; and
- assigning (278) memory to each region based on the screen spaces of the nodes that have been mapped to the respective region.

3. Method (100) according to claim 2, wherein for traversing (272) the level-of-detail structure of each background data set the first tree-traversal depth is used, and determining (260) the first tree-traversal depth is also based on a number of data sets (1-5) in the camera frustrum (10).

4. Method (100) according to claim 2, wherein for traversing (272) the level-of-detail structure of each background data set a second tree-traversal depth is used, wherein
- determining (260) the first tree-traversal depth is also based on a number of data sets (1-5) in the near frustrum (15), and
- allocating (250) the available memory comprises determining (270), based at least on the amount of memory available and on a number of data sets (1-5) in the background frustrum (16), the second tree-traversal depth.

5. Method (100) according to claim 4, wherein allocating (250) the available memory comprises
- estimating, based at least on a number of foreground data sets and background data sets, an amount of 3D data in the foreground and in the background; and
- assigning, based on the estimated amount of 3D data in the foreground and in the background, the available memory as foreground memory to the foreground and as background memory to the background,
wherein
- determining (260) the first tree-traversal depth is based on the foreground memory, and determining (270) the second tree-traversal depth is based on the background memory; and/or
- assigning (268, 278) memory to each region comprises assigning foreground memory to regions of the near frustrum (15) and background memory to regions of the background frustrum (16).

6. Method (100) according to claim 5, wherein assigning the available memory as foreground memory to the foreground and as background memory to the background comprises giving more weight to the estimated amount of 3D data in the foreground, particularly wherein more of the available memory is assigned to the foreground than to the background.

7. Method (100) according to any one of the preceding claims, wherein determining (260) the first tree-traversal depth is also based on a number of data sets (1-5) in the nearfrustrum (15).

8. Method (100) according to any one of the preceding claims, wherein dividing (240) the camera frustrum (10) into a multitude of 3D regions comprises dividing both the near frustrum (15) and the background frustrum (16) into a multitude of 3D regions.

9. Method (100) according to claim 8, wherein the near frustrum (15) and/or the background frustrum (16) are divided into at least nine 3D regions, particularly in a 3×3 matrix.

10. Method (100) according to any one of the preceding claims, wherein defining the subset of data sets (1-5) as foreground data sets comprises determining whether the root node (20) intersects the near frustrum (10).

11. Method (100) according to any one of the preceding claims, selecting the nodes (20-23) comprises removing invisible data sets before performing the level-of-detail selection (130), particularly wherein the invisible data sets are removed by means of bounding-box culling.

12. Method (100) according to any one of the preceding claims, wherein the computing device is a hand-held device, particularly a tablet computer or smart phone, the hand-held device comprising a touch-sensitive display, and the 3D data loaded into the memory is visualized (150) on the touch-sensitive display.

13. Method (100) according to any one of the preceding claims, wherein the memory for visualizing the data sets (1-5) is a memory of a graphics card of the computing device.

14. Computer program product comprising program code having computer-executable instructions for performing the method (100) according to any one of the preceding claims.

15. Hand-held computing device comprising a memory and a touch-sensitive displayforvisualizing3D data loaded into the memory, particularly wherein the device is a tablet computer or smart phone, the device having stored a computer program product according to claim 14 and being configured for performing the method (100) according to any one of claims 1 to 13.
